# EUROPÄISCHE PATENTANMELDUNG

(11) **EP 4 345 494 A1**
(43) Veröffentlichungstag der Anmeldung: **03.04.2024**
(21) Anmeldenummer: 23199365.0
(22) Anmeldetag: 25.09.2023
(51) Int. Cl.: G01S 7/40, G01C 25/00, G01S 7/497, G01S 7/52, G01S 17/931, G02B 5/08

(54) **KALIBRIEREINHEIT ZUR AUSRICHTUNG VON FAHRZEUGUMFELDERFASSUNGSEINHEITEN EINES KRAFTFAHRZEUGS**

(30) Priorität: 30.09.2022 DE 102022125263
(71) Anmelder: TKR Spezialwerkzeuge GmbH, 58285 Gevelsberg (DE)
(72) Erfinder: Kreischer, Torsten, 58300 Wetter (DE)
(74) Vertreter: Kalkoff & Partner Patentanwälte mbB

(57) **Zusammenfassung**

Die Erfindung betrifft eine Kalibriereinheit zur Ausrichtung von Fahrzeugumfelderfassungseinheiten eines Kraftfahrzeugs, mit
- einer verschiebbar auf einem Untergrund aufstellbaren Bodeneinheit,
- einer mit der Bodeneinheit verbundenen Trageinheit und
- einem verstellbar an der Trageinheit angeordneten Targetelement mit einer Funktionsfläche.

Um eine Kalibriereinheit bereitzustellen, die flexibel und zuverlässig zur Ausrichtung unterschiedlicher Fahrzeugumfelderfassungseinheiten eines oder verschiedener Kraftfahrzeuge einsetzbar ist, ist vorgesehen, dass die Funktionsfläche zum Wechsel zwischen einem ersten Betriebszustand und einem zweiten Betriebszustand ausgebildet ist. Die Funktionsfläche weist in dem ersten Betriebszustand mindestens abschnittsweise eine Reflexionsfläche auf und ist in dem zweiten Betriebszustand zur Anzeige eines frei auf der Funktionsfläche positionierbaren Targets ausgebildet.

## Beschreibung

Die Erfindung betrifft eine Kalibriereinheit zur Ausrichtung von Fahrzeugumfelderfassungseinheiten eines Kraftfahrzeugs, mit
- einer verschiebbar auf einem Untergrund aufstellbaren Bodeneinheit,
- einer mit der Bodeneinheit verbundenen Trageinheit und
- einem verstellbar an der Trageinheit angeordneten Targetelement mit einer Funktionsfläche.

Moderne Kraftfahrzeuge weisen eine Vielzahl von Fahrzeugumfelderfassungseinheiten auf. Hierbei handelt es sich um Fahrzeugsensoren, Fahrzeugkameras oder dergleichen, welche bspw. zum Betrieb von unterschiedlichen Assistenzsystemen verwendet werden, die im Betrieb des Kraftfahrzeugs den Fahrer in bestimmten Fahrsituationen unterstützen. Die von den Fahrzeugumfelderfassungseinheiten erfassten Daten werden dabei bspw. von Assistenzsystemen, wie einem Spurhalteassistenten, einem Abstandsregeltempomat, einem Spurwechselassistenten und einem Notbremsassistenten genutzt, um im Betrieb des Kraftfahrzeugs, die dem jeweiligen Assistenzsystem zugeschriebene Funktionalität zu gewährleisten. Die Fahrzeugumfelderfassungseinheiten nutzen dabei neben verschiedenen Kamerasystemen und Sensoren, wie bspw. Ultraschallsensoren auch Radar, Lidar oder dergleichen, um die nötigen Umgebungsinformationen zu ermitteln, sodass durch einen aktiven Fahrzeugeingriff auch Unfälle vermieden oder deren Folgen zumindest abgeschwächt werden können.

Voraussetzungen für die einwandfreie Funktion der Assistenzsysteme ist eine exakte Ausrichtung der jeweils durch die Assistenzsysteme genutzten Fahrzeugumfelderfassungseinheiten. Im Falle von Fehlfunktionen und insbesondere nach einem Austausch der Fahrzeugumfelderfassungseinheiten, bspw. im Rahmen einer Unfallinstandsetzung, ist es zur Gewährleistung der Funktion der Assistenzsysteme zwingend erforderlich, eine Justierung der Fahrzeugumfelderfassungseinheiten, bspw. Kameras oder Sensoren, vorzunehmen, sodass diese exakt an dem Fahrzeug ausgerichtet sind. Eine Ausrichtung erfolgt dabei derzeit üblicherweise unter Zuhilfenahme von sogenannten Targetelementen, bei denen es sich um Kalibriertafeln handelt, welche zur Einstellung der einzelnen Erfassungseinheiten exakt gegenüber dem Kraftfahrzeug ausgerichtet werden müssen. Wesentlich hierfür ist auch eine Ausrichtung des Fahrzeugs gegenüber der Kalibriereinheit, wobei hierzu temporär am Fahrzeug Positionsgeber, wie bspw. Laser, angeordnet werden, um im Werkstattbetrieb eine Ausrichtung der Kalibriereinheit gegenüber dem Fahrzeug zu gewährleisten.

Zur Ausrichtung der unterschiedlichen, an verschiedenen Positionen am Fahrzeug angeordneten Fahrzeugumfelderfassungseinheiten ist es erforderlich, nach der Positionierung des Fahrzeugs gegenüber der Kalibriereinheit das Targetelement in unterschiedlichen Positionen gegenüber dem Fahrzeug und den zu justierenden Fahrzeugumfelderfassungseinheiten anzuordnen.

Für verschiedene Fahrzeugtypen oder verschiedene Fahrzeugumfelderfassungseinheiten, z.B. Kameras und Sensoren, sowie zur Positionierung der Kalibriereinheit gegenüber dem Fahrzeug mittels der Positionsgeber sind unterschiedliche Targetelemente erforderlich. Bereits die Ausrichtung mehrerer unterschiedlicher Fahrzeugumfelderfassungseinheiten eines Fahrzeugs erfordert einen mit hohem Aufwand verbundenen Wechsel des Targetelements. Hiervon ausgehend liegt der Erfindung die Aufgabe zugrunde, eine Kalibriereinheit bereitzustellen, die flexibel und zuverlässig zur Ausrichtung unterschiedlicher Fahrzeugumfelderfassungseinheiten eines oder verschiedener Kraftfahrzeuge einsetzbar ist.

Die Erfindung löst die Aufgabe durch eine Kalibriereinheit mit den Merkmalen des Anspruchs 1. Vorteilhafte Weiterbildungen der Erfindung sind in den abhängigen Ansprüchen angegeben.

Kennzeichnend für die erfindungsgemäße Kalibriereinheit zur Ausrichtung von Fahrzeugumfelderfassungseinheiten eines Kraftfahrzeugs ist, dass die Funktionsfläche zum Wechsel zwischen einem ersten Betriebszustand und einem zweiten Betriebszustand ausgebildet ist, wobei die Funktionsfläche in dem ersten Betriebszustand mindestens abschnittsweise eine Reflexionsfläche aufweist und in dem zweiten Betriebszustand zur Anzeige eines frei auf der Funktionsfläche positionierbaren Targets ausgebildet ist.

Die erfindungsgemäße Kalibriereinheit ist zur Kalibrierung unterschiedlicher Fahrzeugumfelderfassungseinheiten, z.B. Kameras und/oder Sensoren, beispielsweise Ultraschallsensoren, Radar und/oder Lidar, eines und/oder mehrerer Fahrzeuge ausgebildet.

Die Kalibriereinheit ist vorzugsweise zur Verwendung im Werkstattbetrieb ausgebildet. Hierzu weist die erfindungsgemäße Kalibriereinheit eine auf einem Untergrund, beispielsweise einer Werkstatt oder einer Fertigungshalle, aufstellbare Bodeneinheit auf. Die Bodeneinheit ist zum Verschieben auf dem Untergrund ausgebildet. Weiter weist die Kalibriereinheit eine mit der Bodeneinheit verbundene Trageinheit, z.B. einen Träger oder eine Säule, auf.

Das Targetelement ist verstellbar an der Trageinheit angeordnet und weist eine Funktionsfläche auf, die zwischen einem ersten Betriebszustand und einem zweiten Betriebszustand wechselbar ist. Unter verstellbar wird hierbei verstanden, dass das Targetelement gegenüber der Trageinheit, beispielsweise in Längsachsenrichtung der Trageinheit verstellbar und/oder um eine oder mehrere nachstehend beschriebene Gelenkachsen kippbar ist.

Die Verstellbarkeit des Targetelements gegenüber der Trageinheit, beispielsweise einem Träger der Kalibriereinheit, erlaubt es, das Targetelement in der für die Überprüfung bzw. Einstellung erforderlichen Weise auszurichten. Das Targetelement ist derart an der Trageinheit angeordnet, dass die Funktionsfläche von der Trageinheit abgewandt und/oder in der Gebrauchsposition, in der die Kalibriereinheit senkrecht zur Fahrzeuglängsachse verschiebbar ist, beispielsweise vor der Fahrzeugfront in einem definierten Abstand angeordnet ist, dem Fahrzeug zugewandt ist. In der Gebrauchsposition erlaubt es die Kalibriereinheit, das Targetelement quer zur Fahrzeuglängsachse gegenüber der zu überprüfenden bzw. justierenden Fahrzeugumfelderfassungseinheit zu positionieren. Hieran anschließend kann über die Verstellbarkeit des Targetelements eine optimale Ausrichtung des Targetelements gegenüber der zu überprüfenden, bzw. einzustellenden Fahrzeugumfelderfassungseinheit ermöglicht werden.

Ein Wechsel zwischen den Betriebszuständen der Funktionsfläche ermöglicht die Kalibrierung unterschiedlicher Fahrzeugumfelderfassungseinheiten. In dem ersten Betriebszustand weist die Funktionsfläche mindestens abschnittsweise eine Reflexionsfläche auf. Unter mindestens abschnittsweise wird hierbei verstanden, dass ein Flächenanteil von mindestens 10 %, bevorzugt mindestens 25 %, besonders bevorzugt mindestens 50 % der gesamten Funktionsfläche in dem ersten Betriebszustand als Reflexionsfläche ausgebildet sind und/oder eine Reflexionsfläche anzeigt. Die Reflexionsfläche beschreibt eine Oberfläche mit reflektierenden Eigenschaften, d.h. dass die Reflexionsfläche bevorzugt geeignet ist elektromagnetische Wellen, z.B. Licht oder Laserstrahlen, und/oder Schallwellen, beispielsweise Ultraschall gerichtet, d. h. weitestgehend ohne Streuung, insbesondere nach Art einer Spiegelfläche, zu reflektieren.

In dem zweiten Betriebszustand ist die Funktionsfläche zur Anzeige eines frei auf der Funktionsfläche positionierbaren Targets ausgebildet. Unter einem Target wird eine optische Abbildung auf der Funktionsfläche zur Kalibrierung von Fahrzeugumfelderfassungseinheiten, bevorzugt Kameras, verstanden. Bevorzugt weist das Target eine an die zu kalibrierende Fahrzeugumfelderfassungseinheit angepasste Form auf der Funktionsfläche auf. Hierzu ist das Target beispielsweise kreisförmig, polygonförmig oder ellipsenförmig ausgebildet. Weiter weist das Target zum Beispiel eine als Kreis, Rechteck, Kreuz oder Linie ausgebildete Form auf. Ferner weist das Target bevorzugt eine im Vergleich zu einem ersten Farbton der Funktionsfläche kontrastreichen zweiten Farbton auf. Unter kontrastreich wird hierbei verstanden, dass sich das Target für eine Fahrzeugumfelderfassungseinheit, z.B. die Frontkamera eines Fahrzeugs von der Funktionsfläche erkennbar hervorhebt. Beispielsweise weist die Funktionsfläche in dem zweiten Betriebszustand einen weißen Farbton und das Target einen schwarzen Farbton auf.

Eine zum Wechsel zwischen dem ersten und zweiten Betriebszustand ausgebildete Funktionsfläche ermöglicht einen flexiblen Einsatz des Targetelements, bzw. der Kalibreireinheit zur Ausrichtung unterschiedlicher Fahrzeugumfelderfassungseinheiten. Im ersten Betriebszustand erlaubt die mindestens abschnittsweise auf der Funktionsfläche vorgesehene Reflexionsfläche den Einsatz der Kalibriereinheit beispielsweise zur Positionierung der Kalibriereinheit gegenüber einem Fahrzeug und/oder zur Ausrichtung des Radars, Lidars und/oder von Ultraschallsensoren. Im zweiten Betriebszustand ermöglicht die zur Anzeige des Targets ausgebildete Funktionsfläche die Ausrichtung von Kameras, z.B. der Front- und/oder Rückfahrkamera eines Fahrzeugs. Indem das Target frei auf der Funktionsfläche positionierbar ist, ist die Kalibriereinheit zur Ausrichtung unterschiedlicher Kameras eines und/oder verschiedener Fahrzeugtypen und/oder verschiedener Hersteller geeignet. Daher ist die erfindungsgemäße Kalibriereinheit flexibel und zuverlässig zur Ausrichtung unterschiedlicher Fahrzeugumfelderfassungseinheiten eines oder verschiedener Kraftfahrzeuge einsetzbar.

Die Anzeige eines Targets kann je nach Form und Variierung der Position auf der Funktionsfläche grundsätzlich zur Ausrichtung einer Fahrzeugumfelderfassungseinheit ausreichen. Nach einer vorteilhaften Weiterbildung der Erfindung ist jedoch vorgesehen, dass das Targetelement derart ausgebildet ist, dass die Funktionsfläche in dem zweiten Betriebszustand eine Mehrzahl positionierbarer Targets anzeigt. Vorzugsweise sind die Targets im Abstand voneinander, bevorzugt fahrzeugtypabhängig auf der Funktionsfläche angeordnet. Dadurch, dass die Funktionsfläche in dem zweiten Betriebszustand zur Anzeige einer Mehrzahl von frei auf der Funktionsfläche positionierbaren Targets ausgebildet ist, kann die Kalibriereinheit besonders einfach an einen bestimmten Fahrzeugtyp angepasst werden.

Die Funktionsfläche weist im ersten Betriebszustand bevorzugt eine für die einzustellenden Sensoren ausreichende Reflexionsfläche auf. Nach einer vorteilhaften Weiterbildung der Erfindung ist daher vorgesehen, dass das Targetelement derart ausgebildet ist, dass sich die Reflexionsfläche in dem ersten Betriebszustand im Wesentlichen über die gesamte Funktionsfläche erstreckt. Unter im Wesentlichen wird hierbei verstanden, dass die Reflexionsfläche einen Flächenanteil von bis zu 80 %, bevorzugt bis zu 90%, besonders bevorzugt bis zu 100% der gesamten Funktionsfläche aufweist. Indem die Reflexionsfläche sich im Wesentlichen über die gesamte Funktionsfläche erstreckt, kann auf vorteilhafte Weise einer durch die Reflexionsfläche verfehlende Strahlen oder Wellen bedingten Fehlausrichtung der einzustellenden Sensoren entgegengewirkt werden.

Die Verstellung der Funktionsfläche kann grundsätzlich in beliebiger Weise, bspw. durch eine einfache Bedienung an dem Targetelement erfolgen. Nach einer vorteilhaften Weiterbildung der Erfindung ist jedoch vorgesehen, dass die Kalibriereinheit eine Sende- und Empfangseinheit zur drahtlosen Datenübertragung von Informationen an ein mobiles Handgerät aufweist. Über die Sende- und Empfangseinheit werden Informationen von der Kalibriereinheit an das mobile Handgerät übertragen. Auf dessen Anzeigeeinheit, in der Regel einem elektronischen Display, werden dann die Informationen angezeigt. Das mobile Handgerät, z.B. ein Handy, ein Laptop oder ein Tablet, ist bevorzugt zur Steuerung der Kalibriereinheit ausgebildet und/oder mit einer an der Kalibriereinheit angeordneten Steuereinheit verbunden. Die drahtlose Datenübertragung zwischen der Kalibriereinheit und dem mobilen Handgerät erfolgt dabei beispielsweise über ein Mobilfunknetz, über Bluetooth oder eine WLAN-Verbindung innerhalb des Werksstattbetriebes.

Ein Wechsel der Funktionsfläche zwischen dem ersten Betriebszustand und dem zweiten Betriebszustand ist bevorzugt mittels des mobilen Handgeräts steuerbar. Besonders bevorzugt erlaubt das mobile Handgerät die Einstellung der Form und Position des Targets auf der Funktionsfläche sowie ganz besonders bevorzugt die Positionierung der vorteilhaft vorgesehenen Mehrzahl von Targets. Auch besteht die Möglichkeit, über eine mit dem mobilen Handgerät verbundene Datenbank, in der fahrzeugspezifische Daten hinterlegt sind, eine automatisierte Ausrichtung des Targetelements und/oder die Positionierung der Targets zu erreichen. Beispielsweise sind in der Datenbank fahrzeugspezifische Anordnungen der Targets gespeichert, die nach Bedarf über das mobile Handgerät abrufbar sind. Bei der automatischen Ausrichtung des Targetelements signalisiert die Anzeigeeinheit des mobilen Handgeräts dem Nutzer in optischer Weise eine korrekte Ausrichtung des Targetelements.

Indem die Kalibriereinheit eine Sende- und Empfangseinheit zur drahtlosen Datenübertragung von Informationen an ein mobiles Handgerät aufweist, kann auf vorteilhafte Weise eine einfache und schnelle Einrichtung sowie Steuerung der Kalibriereinheit über das mobile Handgerät ermöglicht werden.

Nach einer vorteilhaften Ausgestaltung der Erfindung ist vorgesehen, dass das Targetelement als Magic Mirror ausgebildet ist. Hierbei wird unter einem Magic Mirror eine modulare Anzeigeeinheit verstanden, die in dem ersten Betriebszustand eine zumindest abschnittsweise die Reflexionsfläche aufweisende Funktionsfläche und im zweiten Betriebszustand eine zur Anzeige des Targets ausgebildete Funktionsfläche aufweist. Die Funktionsfläche ist bevorzugt als LCD-, Plasma-, TFT- oder OLED-Oberfläche ausgebildet.

Die vorzugweise an der Kalibriereinheit angeordnete Steuereinheit ist bevorzugt zum Wechsel der Betriebszustände der Funktionsfläche ausgebildet. Die Sende- und Empfangseinheit ist bevorzugt zur Einstellung des Tragelements, beispielsweise zum Wechsel des Betriebszustands mit der Steuereinheit verbunden. Die Steuereinheit ist vorzugsweise als programmierbare Einheit, z.B. als Computer gebildet. Bevorzugt weist die Kalibriereinheit mindestens ein, besonders bevorzugt mehrere Sensorelemente zur Erfassung von Sensorsignalen auf, beispielsweise der Ausrichtung des Targetelements gegenüber der Trageinheit oder der Positionierung der Kalibriereinheit gegenüber dem Fahrzeug. Das oder die Sensorelemente stehen mit der Steuereinheit und/oder der Sende- und Empfangseinheit zur Weiterleitung der erfassten Daten an das mobile Handgerät in Verbindung. Ein als Magic Mirror ausgebildetes Targetelement erlaubt die besonders einfache und flexible Einstellung der Funktionsfläche. Beispielsweise kann die Funktionsfläche in einem dritten Betriebszustand als Anzeigedisplay dem Nutzer eine visuelle Anleitung zur Ausrichtung der Kalibriereinheit anzeigen und dem Nutzer zusätzlich zur Anzeigeeinheit des mobilen Handgeräts in optischer Weise die korrekte Ausrichtung des Targetelements signalisieren. Darüber hinaus ermöglicht ein Magic Mirror als Zukaufteil eine Reduzierung der Herstellungskosten für die Kalibriereinheit.

Nach einer vorteilhaften Weiterbildung der Erfindung ist vorgesehen, dass die Kalibriereinheit eine Gelenkeinheit zur Positionierung des Targetelements gegenüber der Trageinheit aufweist. Die Gelenkeinheit ist derart ausgebildet, dass das Targetelement gelenkig mit der Trageinheit verbunden ist. Die Gelenkeinheit weist beispielsweise ein erstes Anschlusselement zur Aufnahme des Targetelements und ein mit der Trageinheit verbundenes zweites Anschlusselement auf. Die Anschlusselemente sind vorzugsweise relativ zueinander um eine erste Gelenkachse und eine zweite Gelenkachse, die senkrecht zueinander ausgerichtet sind, verschwenkbar. Die Gelenkeinheit kann einen Gelenkkörper aufweisen, der um die erste Gelenkachse schwenkbar mit dem ersten Anschlusselement und um die zweite Gelenkachse schwenkbar mit dem zweiten Anschlusselement verbunden ist. Zur Ausrichtung des ersten Anschlusselements relativ gegenüber dem zweiten Anschlusselement weist die Gelenkeinheit bevorzugt eine motorisch angetriebene Antriebseinheit auf. Besonders bevorzugt weist die Antriebseinheit zwei Linearantriebe auf, die jeweils einen in seiner Längsachsenrichtung verstellbar Kolben aufweisen. Bevorzugt ist die Antriebseinheit zur Ausrichtung der Anschlusselemente zueinander mit der Steuereinheit und/oder der Sende- und Empfangseinheit verbunden. Durch die Gelenkeinheit wird eine einfache und zuverlässige Positionierung des Targetelements gegenüber der Trageinheit ermöglicht, wodurch die Ausrichtung des Targetelements in der für die Justierung der Fahrzeugumfelderfassungseinheit erforderlichen Weise in komfortabler Weise über die Gelenkeinheit bewirkt werden kann.

Die Anordnung der Gelenkeinheit an der Trageinheit kann grundsätzlich in beliebiger Weise erfolgen. Nach einer besonders vorteilhaften Ausgestaltung der Erfindung ist jedoch vorgesehen, dass die Gelenkeinheit, bevorzugt das zweite Anschlusselement mit einem längsverstellbar an einem Träger der Trageinheit angeordneten Kopplungselement verbunden ist.

Gemäß dieser Ausgestaltung der Erfindung weist die Kalibriereinheit einen - bezogen auf die Gebrauchsposition - sich senkrecht erstreckenden Träger auf, an dem die Gelenkeinheit bzw. das Targetelement in seiner Höhe gegenüber dem Untergrund und damit dem zu untersuchenden Fahrzeug eingestellt werden kann. Die Verwendung eines Kopplungselements erlaubt es dabei, dieses in optimaler Weise an die Trägerstruktur anzupassen, wobei das Kopplungselement dann eine einfache und komfortable Verlagerung entlang des Trägers und damit eine exakte Positionierung der Gelenkeinheit gegenüber dem Untergrund erlaubt. Die Verstellung des Kopplungselements kann dabei manuell durch den Nutzer erfolgen oder aber auch durch einen separaten Antrieb, mittels dem das Kopplungselement entlang des Trägers verfahrbar ist.

Zur Überprüfung bzw. Ausrichtung der Fahrzeugumfelderfassungseinheiten ist es erforderlich, das Fahrzeug mit seiner Fahrzeuglängsachse so zu positionieren, dass die Kalibriereinheit senkrecht zur Fahrzeuglängsachse im Abstand von diesem verstellt werden kann, sodass die unterschiedlichen, an verschiedenen Positionen angeordneten Fahrzeugumfelderfassungseinheiten überprüft und ggf. justiert werden können. Nach einer besonders vorteilhaften Ausgestaltung der Erfindung ist hierzu vorgesehen, dass die Bodeneinheit der Kalibriereinheit Rollen zur längsverschieblichen Anordnung an mindestens einer Führungsschiene aufweist.

Gemäß dieser Ausgestaltung der Erfindung sind an der Bodeneinheit Rollen angeordnet, welche an einer in bspw. einer Werkstatt angeordneten Bodenführungsschiene aufgenommen werden können, um so eine lineare Verstellung der Kalibriereinheit in komfortabler Weise zu ermöglichen. Zum Betrieb der Kalibriereinheit ist es erforderlich, das Fahrzeug mit seiner Fahrzeuglängsachse exakt gegenüber der Führungsschiene auszurichten. Nach der Ausrichtung kann dann über eine quer zur Fahrzeuglängsachse erfolgenden Verschiebung der Kalibriereinheit eine Überprüfung bzw. Justierung der Fahrzeugumfelderfassungseinheiten erfolgen. Die Anordnung der Rollen erlaubt es dabei, die Kalibriereinheit in exakter Weise entlang der Führungsschiene zu verlagern, wobei der Abstand der Kalibriereinheit gegenüber dem Fahrzeug in besonderer Weise gewährleistet wird.

Nach einer besonders vorteilhaften Ausgestaltung der Erfindung ist dabei vorgesehen, dass ein oder mehrere Stellantriebe zur motorischen Verstellung der Bodeneinheit entlang der Führungsschiene und/oder des Tragelements, bevorzugt des Kopplungselements, entlang des Trägers vorgesehen sind. Die Verwendung von Stellantrieben, welche ebenfalls mit der Steuereinheit verbunden sein können, erlaubt es in besonders komfortabler Weise, die Kalibriereinheit gegenüber dem Fahrzeug auszurichten.

Nach einer Weiterbildung der Erfindung ist ferner vorgesehen, dass das Targetelement derart mit einem Absorberelement versehen ist, dass Störstrahlungen gedämpft werden. Gemäß dieser Ausgestaltung der Erfindung weist das Targetelement ein- oder mehrstückiges Absorberelement auf, das derart an dem Targetelement angebracht ist, dass während der Ausrichtung der Fahrzeugumfelderfassungseinheiten Störstrahlungen, welche die Ausrichtung stören können, gedämpft bzw. vermieden werden. Die Verwendung eines Absorberelements ermöglicht somit in besonders exakter und akkurater Weise eine genaue und einfache Ausrichtung der Fahrzeugumfelderfassungseinheiten gegenüber dem entsprechend angeordneten Targetelement. Störstrahlungen, welche z.B. zu Interferenzen und damit zu Ungenauigkeiten bei der Ausrichtung der Fahrzeugumfelderfassungseinheit führen können, werden in besonders zuverlässiger Weise vermieden.

Die Anordnung des Absorberelements sowie die Auswahl des hierfür verwendeten Materials sind grundsätzlich frei wählbar, wobei dies derart erfolgt, dass während der Ausrichtung auftretende und die Ausrichtung behindernde Störstrahlungen vermieden, bzw. zumindest gedämpft werden.

Nach einer besonders vorteilhaften Ausgestaltung ist dabei vorgesehen, dass das Absorberelement zumindest abschnittsweise umlaufend an der Funktionsfläche des Targetelements angeordnet ist. Gemäß dieser Ausgestaltung der Erfindung weist das Targetelement - bezogen auf die Gebrauchslage - an ihrer dem Fahrzeug zugewandten Funktionsfläche das Absorberelement auf, wobei dieses besonders bevorzugt im Randbereich der dem Fahrzeug zugewandten Funktionsfläche der Trageinheit umlaufend angeordnet ist, wodurch in besonders zuverlässiger Weise vermieden wird, dass es zu Störstrahlungen kommt, welche zu einer fehlerhaften Ausrichtung der Fahrzeugumfelderfassungseinheiten führen können.

Die Anordnung des Absorberelements kann dabei bspw. durch eine einfache Klebeverbindung mit Funktionsfläche des Targetelements oder durch lösbare Verbindungen, wie bspw. Schraubverbindungen, hergestellt werden, wodurch die Möglichkeit besteht, das Absorberelement im Falle einer Beschädigung in einfacher und kostengünstiger Weise auszutauschen.

Ein Ausführungsbeispiel der Erfindung ist nachstehend mit Bezug auf die Zeichnungen erläutert. In den Zeichnungen zeigen:
- Fig. 1a: eine perspektivische Ansicht einer Kalibriereinheit mit einer in einem ersten Betriebszustand eingestellten Funktionsfläche eines Targetelements;
- Fig. 1b: eine perspektivische Ansicht der Kalibriereinheit von Fig. 1a mit der in einem zweiten Betriebszustand eingestellten Funktionsfläche des Targetelements;
- Fig. 2: eine weitere perspektivische Ansicht der Kalibriereinheit von Fig. 1a und Fig. 1b und

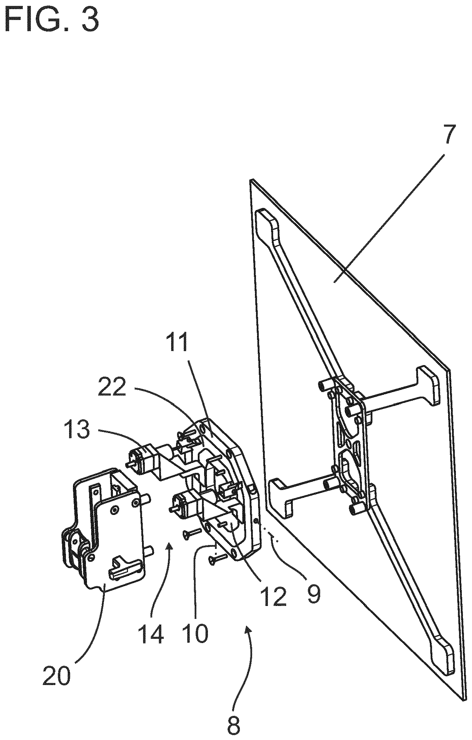

- Fig. 3: in einer Explosionsdarstellung eine perspektivische Ansicht eines Kopplungselements, einer Gelenkeinheit und des Targetelements der Kalibriereinheit von Fig. 1a und Fig. 1b.

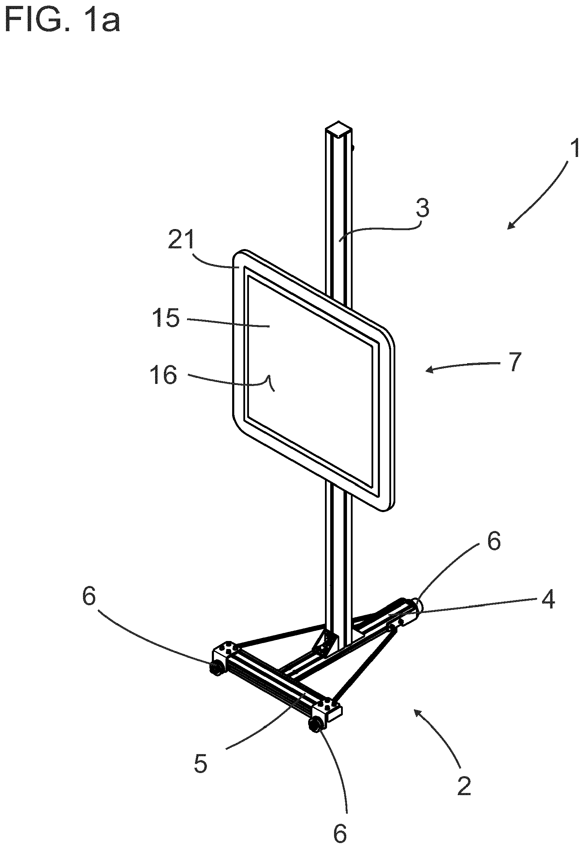

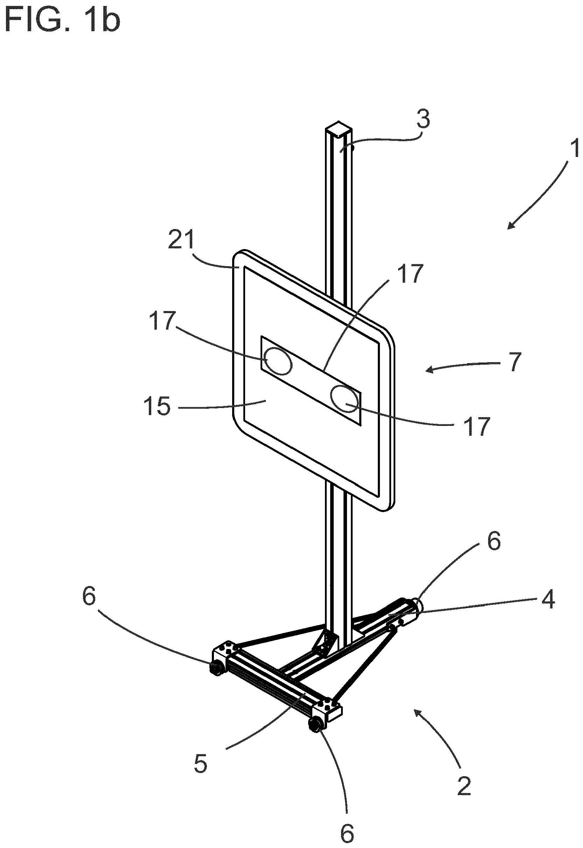

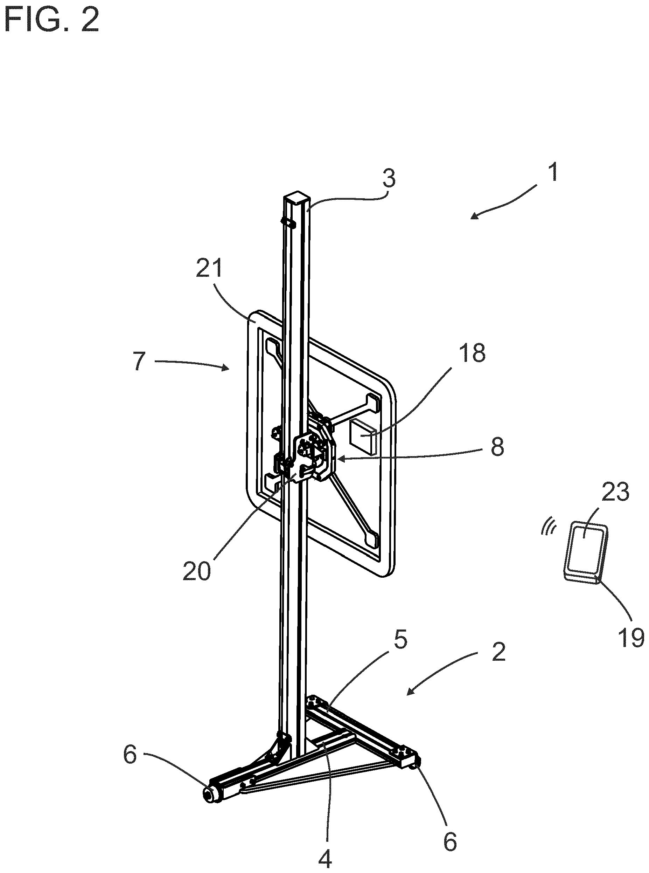

Eine Kalibriereinheit 1 mit einer Bodeneinheit 2 sowie einer sich senkrecht ausgehend von der Bodeneinheit 2 erstreckenden, eine Trageinheit bildenden Säule 3 ist in den Figuren 1a, 1b und 2 in zwei unterschiedlichen perspektivischen Darstellungen wiedergegeben.

Die Bodeneinheit 2 der Kalibriereinheit 1 setzt sich aus einem Längsträger 4 sowie einem Querträger 5 zusammen. An den Enden des Querträgers 5 sowie an dem dem Querträger 5 gegenüberliegenden Ende des Längsträgers 4 sind Rollen 6 angeordnet, deren Drehachsen parallel zueinander verlaufen. Die Rollen 6 ermöglichen es, die Kalibriereinheit 1 beispielsweise in einer Werkstatt an einer zur Aufnahme der Kalibriereinheit 1 vorgesehenen Schienenanordnung längsverstellbar anzuordnen. Hierdurch kann die Kalibriereinheit 1 bei einer Positionierung eines hier nicht dargestellten Kraftfahrzeugs derart, dass die Fahrzeuglängsachse senkrecht zum Schienensystem verläuft, senkrecht zur Fahrzeuglängsachse gegenüber dem Fahrzeug verschoben werden und dabei mit einem Targetelement 7 gegenüber den zu überprüfenden bzw. einzustellenden Fahrzeugumfelderfassungseinheiten positioniert werden kann.

Das Targetelement 7 ist über eine Gelenkeinheit 8 um eine - bezogen auf die in den Figuren 1a, 1b und 2 dargestellte Gebrauchsposition - erste horizontal verlaufende Gelenkachse 9 sowie eine zweite senkrecht verlaufende Gelenkachse 10 verstellbar. Die Gelenkeinheit 8 weist hierzu ein erstes Anschlusselement 11, einen Gelenkkörper 22 sowie ein zweites Anschlusselement 12 auf, die koaxial zueinander angeordnet sind und dabei eine achteckige, aneinander angepasste Form aufweisen.

Zur Erzeugung einer Verstellbewegung des Targetelements 7 um die erste Gelenkachse 9 sowie die zweite Gelenkachse 10 dient eine zwei Linearantriebe 13 aufweisende Antriebseinheit 14. Über die Gelenkeinheit 8 kann das mit dem ersten Anschlusselement 11 verbundene Targetelement 7 gegenüber dem mit einem Kopplungselement 20 verbundenen zweiten Anschlusselement 12 um die erste und zweite Gelenkachse 9, 10 verstellt werden.

Das Targetelement ist als Magic Mirror 7 ausgebildet und weist eine zum Wechsel zwischen einem in Fig.1a dargestellten ersten Betriebszustand und einem in Fig. 1b dargestellten zweiten Betriebszustand ausgebildete Funktionsfläche 15 auf. In dem ersten Betriebszustand weist die Funktionsfläche 15 eine sich im Wesentlichen über die gesamte Funktionsfläche 15 erstreckende Reflexionsfläche 16 auf. In dem zweiten Betriebsmodus ist die Funktionsfläche 15 zur Anzeige einer Mehrzahl von frei auf der Funktionsfläche 15 positionierbaren Targets 17 ausgebildet. Der Magic Mirror 7 weist ferner ein umlaufend an der Funktionsfläche 15 angeordnetes Absorberelement 21 zum Dämpfen von Störstrahlungen auf.

Die Kalibriereinheit 1 weist eine Steuerreinheit und eine an dem Magic Mirror 7 angeordnete Sende- und Empfangseinheit 18 zur drahtlosen Datenübertragung von Informationen an ein mobiles Handgerät 19 auf. Über die Sende- und Empfangseinheit 18 werden Informationen von der Kalibriereinheit 1 an das mobile Handgerät 19 übertragen und auf dessen Anzeigeeinheit in Form eines elektronischen Displays 23 angezeigt. Die Sende- und Empfangseinheit 18 ist zur Einstellung des Magic Mirrors 7, beispielsweise zum Wechsel des Betriebszustands der Funktionsfläche 15 mit der Steuereinheit verbunden. Über eine mit dem mobilen Handgerät 19 verbundene Datenbank, in der fahrzeugspezifische Daten hinterlegt sind, erfolgt eine automatisierte Ausrichtung des Magic Mirrors 7 und eine fahrzeugspezifische Positionierung der Targets 17. Ferner ist die Antriebseinheit 14 zur Ausrichtung der Anschlusselemente 11, 12 zueinander über die Sende- und Empfangseinheit 18 mit dem mobilen Handgerät 19 verbunden.

Mit dem Magic Mirror 7 der Kalibriereinheit 1 wird eine flexible und zuverlässige Ausrichtung unterschiedlicher Fahrzeugumfelderfassungseinheiten eines oder verschiedener Kraftfahrzeuge ermöglicht.

Alle in Verbindung mit einzelnen Ausführungsformen der Erfindung erläuterten Merkmale können in unterschiedlicher Kombination für die Kalibriereinheit 1 vorgesehen sein, um deren vorteilhafte Wirkungen zu realisieren, auch wenn diese zu unterschiedlichen Ausführungsformen beschrieben worden sind. So kann beispielsweise ein als Magic Mirror 7 ausgebildetes Targetelement auf der Funktionsfläche 15 eine Reflexionsfläche 16 aufweisen, deren Flächenanteil an der gesamten Funktionsfläche 15 mittels der Steuereinheit und dem mobilen Handgerät 19 einstellbar ist.

Der Schutzbereich der vorliegenden Erfindung ist durch die Ansprüche gegeben und wird durch die in der Beschreibung erläuterten oder in den Figuren gezeigten Merkmale nicht beschränkt.

### Bezugszeichenliste

- 1: Kalibriereinheit
- 2: Bodeneinheit
- 3: Trageinheit/Säule
- 4: Längsträger
- 5: Querträger
- 6: Rolle
- 7: Targetelement/ Magic Mirror
- 8: Gelenkeinheit
- 9: erste Gelenkachse
- 10: zweite Gelenkachse
- 11: erstes Anschlusselement
- 12: zweites Anschlusselement
- 13: Linearantrieb
- 14: Antriebseinheit
- 15: Funktionsfläche
- 16: Reflexionsfläche
- 17: Target
- 18: Sende- und Empfangseinheit
- 19: mobiles Handgerät
- 20: Kopplungselement
- 21: Absorberelement
- 22: Gelenkkörper
- 23: elektronisches Display

## Patentansprüche

1. Kalibriereinheit zur Ausrichtung von Fahrzeugumfelderfassungseinheiten eines Kraftfahrzeugs, mit
- einer verschiebbar auf einem Untergrund aufstellbaren Bodeneinheit (2),
- einer mit der Bodeneinheit (2) verbundenen Trageinheit (3) und
- einem verstellbar an der Trageinheit (3) angeordneten Targetelement (7) mit einer Funktionsfläche (15),
**dadurch gekennzeichnet, dass** die Funktionsfläche (15) zum Wechsel zwischen einem ersten Betriebszustand und einem zweiten Betriebszustand ausgebildet ist, wobei die Funktionsfläche (15)
- in dem ersten Betriebszustand mindestens abschnittsweise eine Reflexionsfläche (16) aufweist und
- in dem zweiten Betriebszustand zur Anzeige eines frei auf der Funktionsfläche (15) positionierbaren Targets (7) ausgebildet ist.

2. Kalibriereinheit nach Anspruch 1, **dadurch gekennzeichnet, dass** das Targetelement (7) derart ausgebildet ist, dass die Funktionsfläche (15) in dem zweiten Betriebszustand eine Mehrzahl positionierbarer Targets (17) anzeigt.

3. Kalibriereinheit nach einem oder mehrerer der vorhergehenden Ansprüche, **dadurch gekennzeichnet, dass** das Targetelement (7) derart ausgebildet ist, dass sich die Reflexionsfläche (16) in dem ersten Betriebszustand im Wesentlichen über die gesamte Funktionsfläche (15) erstreckt.

4. Kalibriereinheit nach einem oder mehrerer der vorhergehenden Ansprüche, **gekennzeichnet durch** eine Sende- und Empfangseinheit (18) zur drahtlosen Datenübertragung von Informationen an ein mobiles Handgerät (19).

5. Kalibriereinheit nach einem oder mehrerer der vorhergehenden Ansprüche, **dadurch gekennzeichnet, dass** das Targetelement als Magic Mirror (7) ausgebildet ist.

6. Kalibriereinheit nach einem oder mehrerer der vorhergehenden Ansprüche, **gekennzeichnet durch** eine Gelenkeinheit (8) zur Positionierung des Targetelements (7) gegenüber der Trageinheit (3).

7. Kalibriereinheit nach einem oder mehrerer der vorhergehenden Ansprüche, **dadurch gekennzeichnet, dass** die Gelenkeinheit (8) mit einem längsverstellbar an einem Träger der Trageinheit (3) angeordneten Kopplungselement (20) verbunden ist.

8. Kalibriereinheit nach einem oder mehrerer der vorhergehenden Ansprüche, **dadurch gekennzeichnet, dass** die Bodeneinheit (2) Rollen (6) zur längsverschieblichen Anordnung an mindestens einer Führungsschiene aufweist.

9. Kalibriereinheit nach einem oder mehrerer der vorhergehenden Ansprüche, **dadurch gekennzeichnet, dass** das Targetelement (7) derart mit einem Absorberelement (21) versehen ist, dass Störstrahlungen gedämpft werden.

10. Kalibriereinheit nach einem oder mehrerer der vorhergehenden Ansprüche, **dadurch gekennzeichnet, dass** das Absorberelement (21) zumindest abschnittsweise umlaufend Funktionsfläche (15) des Targetelements (7) angeordnet ist.
